# EUROPEAN PATENT APPLICATION

(11) **EP 1 122 009 A1**
(43) Date of publication of application: **08.08.2001**
(21) Application number: 00102547.7
(22) Date of filing: 07.02.2000
(51) Int. Cl.: B23B 5/16, F16L 13/14, F16L 9/133, F16L 58/10, B21D 39/04

(54) **Method and means of removing the metal layer at an end of metal-plastic multilayer pipe in preparation for attaching a compression fitting thereto**

(71) Applicant: Franz Viegener II GmbH & Co. KG., 57439 Attendorn (DE)
(72) Inventor: Viegener, Walter, 57439 Attendorn (DE)
(74) Representative: Dantz, Jan Henning

(57) **Abstract**

Apparatus for removing the metal layer from a metal-plastic multilayer pipe (20) where the pipe has a plastic inner pipe (30), a metal layer (32) around the plastic inner pipe (30), the metal layer (32) of uniform thickness and is applied to the plastic inner pipe (30) so that it completely encircles the plastic inner pipe (30), with the feature that the apparatus has: a pipe holding post (70); a blade (52) secured to the post and positioned with the cutting-edge (51) thereof along the post; means (80) for guiding insertion of the post into the end of the pipe (20) so that the blade (52) cuts into the metal layer (32) down to the inner plastic pipe (30); and means (60) enabling rotating the post ( 70) and blade (52) with respect to the pipe (20) or rotating the pipe with respect to the post and blade in a direction so that the metal layer (32) thereon is peeled from the end of the tube down to the plastic inner pipe (30).

## Description

This invention relates to a metal-plastic multilayer pipe with a plastic inner pipe and metal sheath around the plastic inner pipe, suitable for use in domestic hot and cold water plumbing systems and hydronic heating systems and more particularly to methods and means of removing the metal layer at an end of metal-plastic multilayer pipe in preparation for attaching a compression fitting thereto for use in plumbing and heating systems,

### BACKGROUND OF THE INVENTION

### Plastic Tubing For Hydronic Heating and Plumbing

In plumbing and in hydronic heating systems good quality "cross-linked" polyethylene tubing can carry water at temperature in excess of 140°F without any deterioration of the tubing or the tubing oxygen barrier. The design criteria of plastic tubing for radiant floor and wall hydronic heating systems is determined by a number of important factors to insure an absolutely safe and reliable tubing. The same design criteria are often demanded for hot and cold water domestic plumbing systems. The most important design criteria requirements are:
1. High resistance to temperature aging for water temperatures up to 200°F.
2. High resistance to stress cracking.
3. High resistance to chemical solvents (water additives, antifreeze solutions, concrete additives).
4. Lowest possible linear thermal expansion.
5. High tensile strength.
6. High form stability.
7. High resistance to abrasion.
8. High resistance to deformation.
9. Dimensional tube tolerances.
9. Internal and external tube wall smoothness.
10. Behavior during long term internal pressure creep test which takes into account the temperature-dependent aging behavior of the pipe material at water temperatures up to 200°F.

Many of these requirements are dictated by the usual practice in hydronic heating of embedding the tubing in a layer of concrete. They are design criteria that are outlined and specified in the ASTM standards (American Society for Testing and Materials), and DIN (German Industry Standards). Many, if not all of these design requirements can be achieved while still retaining a flexible and workable plastic tubing (pipe) as an end product. That tubing is called PEX, which is short for "Polyethelene Cross-Linked". PEX has been synonomous with plastic heating pipe in many European countries for several decades and has a track record that has made it the plastic tubing of choice for hydronie heating applications. Long term bench tests, which simulate 30 years of continuous use, in addition to accelerated testing which projects pipe performance well in excess of 30 years has confirmed the excellent long term real service life track record of PEX tubing. Now after over 20 years of use and improvements, PEX tubing is the most widely accepted pipe material in the European plumbing industry for both heating and plumbing applications.

Thus, by cross-linking, a previously non-applicable PE pipe is transformed into a completely different material with all the desired characteristics demanded for plumbing and heating pipe. After the cross-linking of the PE tubing, its molecular mobility is severely impeded by the cross-linking bridges between the string molecules. The material does not flow or melt and its form becomes stable against heat. The material holds its shape at all temperatures, even exposed to blow torch temperatures until it chars or burns. The thermoplastic has been transformed into a thermoset material by cross-linking, eliminating the melting point or liquid phase of the material. The PE pipe has been transformed into PEX pipe

### Oxygen Diffusion In A Closed Loop System

A closed loop hydronic heating system will cause an oxygen poor water condition after the initial filling of the piping system. Oxygen depleted water (dead water) in an oxygen tight closed piping system is an effective and inexpensive hear transfer medium. The benefit of oxygen depleted water is its non-corrosiveness to System components, piping, valves, pumps, boilers, etc. However, this generated "oxygen vacuum" within a closed piping system causes a very high affinity in the system water for oxygen enrichment. This means that the generated oxygen vacuum in the system will absorb outside oxygen through any means possible.

In a steel or copper piping system the only source of oxygen permeation is through leaking fittings, valves, air vents, and above all, improperly sized expansion tank equipment. Copper or steel tubing itself is absolutely oxygen tight. However, that is not the case with plastic or rubber tubing. In recent years it has been discovered in Europe, after enormous corrosion and subsequent sludging problems developed in systems utilizing oxygen permeable plastic tubing in "closed systems", that plastic tubing allowed enough oxygen permeation through the pipe wall to cause corrosion in the system.

Subsequently, a special oxygen diffusion test for plastic tubing was developed to determine the amount of oxygen penetrating the tubing. The chemically bound oxygen (no visible air bubbles) in the system water entering through the pipe walls creates an extremely aggressive water condition, corroding not only ferrous materials but also copper, brass and plastics as well. The tests revealed that the rate of oxygen diffusion is directly related to the system water temperature - the higher the water temperature, the higher the rate of diffusion which is measured in milligrams per liter per day.

The German Industry standards (DIN) have determined that an oxygen diffusion rate of 0.1 mg/liter/day or less at a water temperature of 104°F (40°C) in plastic tubing is considered a safe level to prevent oxygen corrosion in heating system components. For comparison: The amount of 5 milligrams of oxygen per liter per day caused by oxygen diffusion through the pipe wall is equivalent to completely draining the heating system and refilling it with fresh water every other day during the heating season.

In order to eliminate the serious problems of oxygen diffusion on closed loop heating systems with plastic pipe, oxygen diffusion barriers have been developed. These barriers are usually applied to the exterior of the pipe . Each pipe manufacturer has its own method and process for applying this barrier. The main criteria for these barrier application techniques are the operating water temperatures of the intended pipe usage,

Oxygen diffusion is obviously no issue for plastic tubing intended for use on open hct and cold domestic hot water systems (plumbing systems) where oxygen is present at high concentrations in any case. However the aggressive corroding condition is prevented by the continuous dilution of fresh water to the system.

In the past, the metal-plastic multilayer pipes for plumbing and heating have met SDR requirements specified in the ASTM standards, and DIN only by making the metal sheath a major structural part of the pipe and so the inner plastic pipe (which may be PEX) was not strong enough by itself to meet those requirements. As a consequence, the metal sheath accounted for a substantial part of the overall strength and stiffness of the multilayer pipe and could be bent by hand only with difficulty. As a further consequence, fittings attached to such metal-plastic multilayer pipe had to be attached with a seal over the metal sheath, because peeling off the metal sheath to attach the fitting left only the plastic inner tube which by itself was inadequate.

Metal-plastic pipes are are now available from manufacturers, such as Hewing GmbH of Ochtrup, Germany, in which, the metal sheath and any practical protective plastic layer covering it, accounts for a negligible part of the overall strength and stiffness of the multilayer pipe. For such pipes, the inner plastic tube (which may be a PEX tube) alone meets all criteria for plumbing and heating called for by ASTM and DIN standards. As a consequence, the metal sheath can be removed from the ends of the pipe where compression fittings are to be attached and conventional compression fittings can be attached thereto by a workman using conventional tools. However, before attaching a fitting, the workman must first remove the metal sheath (layer and any practical plastic layer covering it from the end of the pipe leaving the bare inner plastic (PEX) pipe (layer), preferably unscathed, so that the conventional compression fitting can be attached thereto.

It is the principal object of the present invention to provide a method and means of removing the metal layer from an end of such a metal-plastic multilayer pipe.

It is another object ofthe present invention to provide a method and means of readily removing the metal layer from an end of such a metal-plastic multilayer pipe, in situs, using a specialized hand tool.

### SUMMARY OF THE INVENTION

According to an embodiment of the present invention, the metal sheath ( layer) and any practical plastic layer covering it, is removed from the end of the metal-plastic multilayer pipe leaving the bare inner plastic (PEX) pipe (layer) by the following steps: (A) providing a tube holding post which can be inserted into an open end of the pipe projecting into the pipe sufficiently to hold the pipe securely; (B) providing a blade having a cutting edge that spans the length of the end of the pipe from which the mental sheath and any protective plastic covering layer on it, is to be removed; (C) attaching the blade to the post with the cutting edge thereof along the post; (D) positioning the blade with respect to the post with the cutting-edge thereof a distance from the post the equivalent or equal to the thickness of the plastic (PEX) inner layer of the pipe; (E) inserting the post with the blade so secured and positioned thereto into the open end of the pipe; (F) whereby the blade cuts into the metal layer and any plastic covering layer thereon at the end of the pipe down to be inner PEX layer (pipe) of the pipe; and (G). rotating the post and blade with reference to the pipe about the common axes thereof; (H) whereby the blade cuts in the metal layer and any plastic covering layer thereon from the edge from the end of the pipe over a length thereof suitable for attaching a conventional compression fitting thereto.

According to another feature of the present intention the above described steps are carried out by apparatus that includes: (a) a pipe holding post; (b) a blade secured to the post and positioned with the cutting-edge thereof along the post; (c) means for guiding insertion of the post into the end of the pipe so that the blade cuts into the metal layer down to the inner PEX layer; and (d) means enabling rotating the post and blade with respect to the pipe or rotating the pipe with respect to the post and blade in a direction so that the metal layer and any covering plastic layer thereon is peeled from the end of the tube down to the inner PEX layer of the tube.

With this apparatus, the metal sheath is stripped from the end of the pipe, leaving the stripped end suitable for attaching a conventional compression fitting thereto by a workman having conventional skills and using conventional compression fitting tools. Furthermore, the metal layer (where it remains on the tube) is an oxygen barrier, while the plastic inner pipe is PEX to satisfy the criteria for hydronic heating including having an oxygen diffusion barrier required for closed hydronic heating systems and also satisfying all requirements of hot and cold domestic hot water plumbing systems.

### DESCRIPTION OF THE DRAWINGS

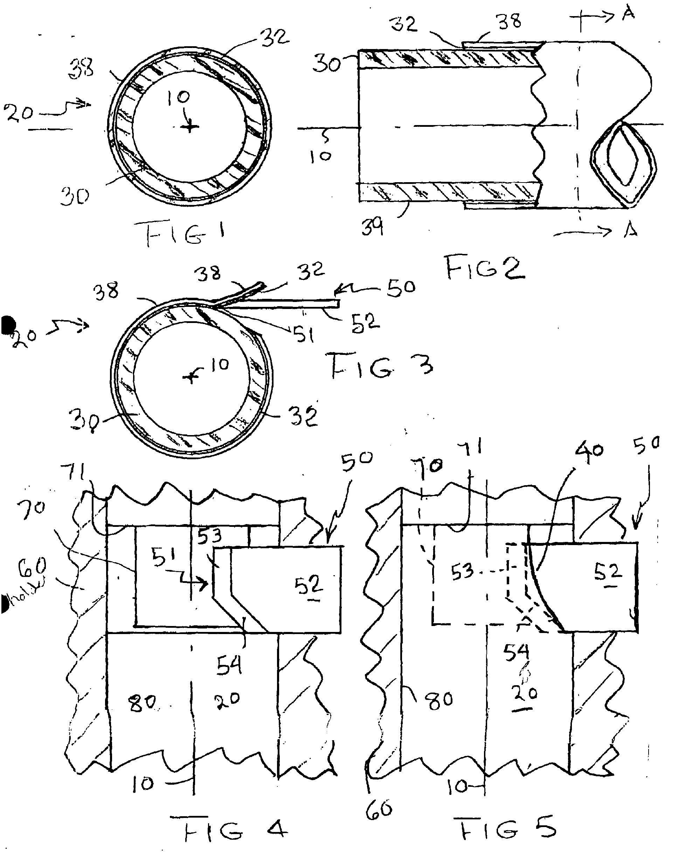

Figure 1 is a cross section view AA, taken as shown in Figure 2, of a metal-PEX multilayer pipe of the kind that is currently available from manufacturers, such as Hewing GmbH of Ochtrup, Germany, showing the metal layer or sheath 32 around an inner PEX pipe (layer) 30, inseparably attached thereto and an outer practical plastic layer 38 covering the metal layer

Figure 2 is a side view of a piece of the pipe of Figure 1 in which an end 39 has been stripped of the metal layer 32 and the outer plastic layer 38 over a length 39 suitable for attaching a conventional compression fitting thereto;

Figure 3 is also a cross-section view of the pipe in Figures 1 and 2 showing the beginning steps to remove the metal layer 32 and plastic covering glare 38 from the end of the tube down to the PEX layer 30 over the length of 39 at the end of the tube, using a cutter 50 having a cutting edge 51 at an edge of the cutter blade 52 and showing the cutter so positioned with respect to the tube that it cuts through the layers 38 and 32 down to the PEX layer at an oblique angle thereto and can be held there while the tube is rotated on its axis 10 to remove just the layers 32 and 38 and none of the PEX layer 30.

Figures 4 and 5 illustrate apparatus including a cutter 50 , like the cutter shown in Figure 3, attached to a holder 60 that includes a post 70 contained therein and a passage 80 through the holder to the post, adapted for inserting the end of the metal-PEX multilayer pipe, such as pipe 20 that has not been stripped for fittings, into the passage 80 up to the blade, as shown in Figure 4; and then forcing the tube 20 further into the passage onto the post and engaging the blade cutting edge 51 to cut through the outer and metal layers 38 and 32 down to the PEX layer 30, longitudinally along the tube along a line something like line 40;

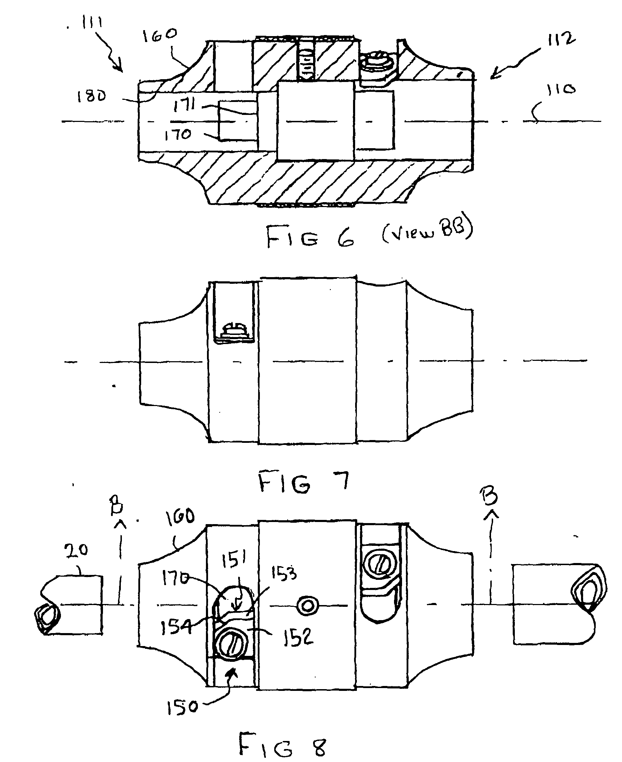

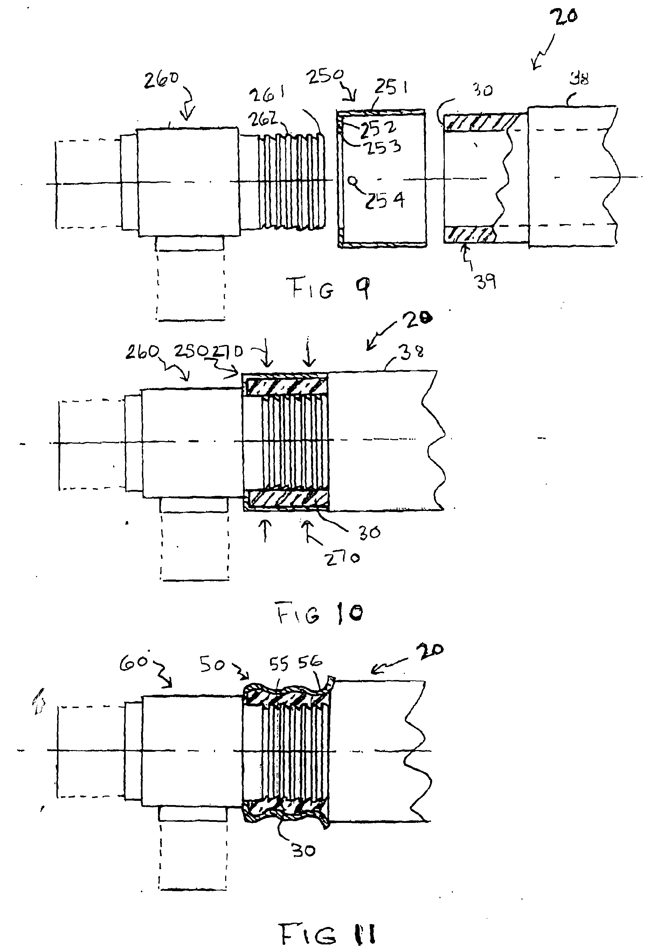

Figures 6, 7 and 8 show a particular embodiment of suitable apparatus for carrying out the method of the present invention and usedin a similar way as the structure illustrated by Figures 3, 4 and 5; Figure 6 being a cross-section side view BB of the apparatus through the axis, taken as shown in Figure 8; Figure 7 is a side view; and Figure 8 is the top view; and

Figures 9, 10 and 11 show the same piece of tubing as in Figures 1 and 2 with an end suitably stripped by a workman using the apparatus shown in Fiugures 6, 7 and 8 as described at three steps performed in attaching a conventional T fitting thereto using conventional tools.

### DESCRIPTION OF EMBODIMENTS OF THE INVENTION

Figure 1 is a cross section view AA, taken as shown in Figure 2 perpendicular to the axis 10, of a metal-PEX multilayer pipe 20 of the kind that is currently available from manufacturers, such as Hewing GmbH of Ochtrup, Germany, showing the metal layer or sheath 32 around an inner PEX pipe (layer) 30, inseparably attached thereto and an outer practical plastic layer 38 covering the metal layer.

Figure 2 is a side partially cross-sectioned view of a piece of the pipe of Figure 1 in which an end 39 has been stripped of the metal layer 32 and the outer plastic layer 38 over a length 39, which is suitable for attaching a conventional compression fitting thereto;

Figure 3 is also a cross-section view of the pipe in Figures 1 and 2 showing the beginning steps to remove the metal layer 32 and plastic covering layer 38 from the end of the tube 20 down to the PEX layer 30 over the length 39 at the end of the tube, using a cutter 50 that has a cutting edge 51 at an edge of the cutter blade 52.

As shown, the cutter blade 52 is so positioned with respect to the tube 20 that it cuts through the layers 38 and 32 down to the PEX layer 30 at an oblique angle thereto. The oblique angle that the cutter blade 52 makes with the circumference of the PEX layer 30 is essentially tangential and may be varied slightly plus or minus from tangential to insure a clean cut through plastic outer layer and the metal layer to the PEX layer 30 without cutting into the PEX layer.

Having so inserted the cutting edge 51 of the blade 52 into the tube through layers 38 and 32, the blade can be held in position while the tube is rotated on its axis 10 to remove just the layers 32 and 38 and none of the PEX layer 30 .

Figures 4 and 5 illustrate apparatus including a cutter 50 , like the cutter shown in Figure 3, attached to a holder 60 that includes a post 70 contained therein and a passage 80 through the holder to the post, adapted for inserting the end of the metal-PEX multilayer pipe, such as pipe 20 that has not been stripped for fittings, into the passage 80 up to the blade, as shown in Figure 4; and then forcing the tube 20 further into the passage onto the post and engaging the blade cutting edge 51 to cut through the outer and metal layers 38 and 32 down to the PEX layer 30, longitudinally along the tube along a line something like line 40.

As the tube is forced onto the blade cutting edge 51, the part 54 of the edge that is first engaged by the tube 20 may be at an angle to the direction of movement of the tube (along axis 10) as it is forced through the blade edge onto the post 70, With that part of the blade cutting edge so angled , it is more likely to acheive a clean cut into the tube outer layers and avoid tearing. Then , when the tube is fully inserted onto the post, as shown in Figure 5, both parts 53 and 54 of the cutter edge 51 cut the outer layers of the tube free as the tube is rotated on its axis 10 with respect to the holder 60 and cutter 50.

Figures 6, 7 and 8 show a particular embodiment of suitable apparatus for carrying out the method of the present invention and used in a way similar to the way the structure illustrated by Figures 3, 4 and 5 is used.

Figure 6 is a cross-section side view BB of the apparatus through the axis 110, taken as shown in Figure 8. It has two ends 111 and 112 for stripping the outer layers 38 and 32 of a tube such as tube 20 down to the PEX layer 30, the end 111 being used for stripping a small diameter tube and the end 112 for stripping a larger diameter tube . Inasmuch as the two ends 111 and 112 are the same except for size, only end 111 is described in detail herein.

These figures show a common holder 160 and the ends 111 and 112 the same except for size. The end 111 includes a cutter 150, like the cutter 50 shown in Figure 3, attached to the holderl 60 that includes a postl 70 contained therein and a passagel 80 through the holder to the post, adapted for inserting the end of the metal-PEX multilayer pipe, such as pipe 20, that has not been stripped for fittings, into the passage 180 up to the blade, as shown also in Figure 4; and then forcing the tube 20 further into the passage onto the post and engaging the blade cutting edgel 51 to cut through the outer and metal layers 38 and 32 down to the PEX layer 30 of tube 20, longitudinally along the tube along a line something like line 40, shown in Figure 5.

As the tube is forced onto the blade cutting edge 151, the part 154 of the edge that is first engaged by the tube 20 may be at an angle to the direction of movement of the tube (along axis 110) as it is forced through the blade edge onto the post 170. In this apparatus, as described with respect to Figures 4 and 5, with that part of the blade cutting edge so angled , it is more likely to achieve a clean cut into the tube outer layers and avoid tearing. Then , when the tube is fully inserted onto the post and abuts the post seat 171 , as shown similarly in Figure 5 , both pans 153 and 154 of the cutter edge 51 cut the outer layers of the tube free as the tube is rotated on its axis 110 with respect to the holder 160 and cutter 150. Or the tube can be held fast and the holder 160 rotated on axis 110.

As the tube or holder is so rotated, one with respect to the other, while holding the tube firmly on the post against the post seat the layers 38 and 32 are cut from or stripped from the inner PEX layer leaving the end of the tube along part 39 ready for attachment of a pressure fitting.

Figures 9, 10 and 11 show the same piece of tubing 20 as in Figures 1 and 2 in which an end has been stripped of the metal sheath 32 and outer plastic layer 38 for a length 39 suitable for attaching a conventional compression T fitting 260 thereto, at three steps performed in attaching a conventional T fitting thereto using conventional tools. Turning next to these figures, Figure 9 shows tubing 20 and T fitting 260 aligned with compression fitting sleeve 250 in between and ready for assembly.

The compression fitting sleeve 250 is preferably stainless steel and accommodates the T fitting which is preferably bronze and the opening 253 in the sleeve allows insertion of the T, fitting ridged male tube insert 261 through opening 253 . The sleeve skirt 251 accommodates the length of male tube insert 261 and the length 39 of tube 20 that is peeled. A hole 254 may be provided in the sleeve so that when the sleeve is inserted onto the peeled end of the tubing and the fitting male insert is inserted into the sleeve and the tubing, as shown in Figure 10, the worker can observe the end of the inner tube 30 through the hole and so ascertain that the insertions are full and seated.

Next, as illustrated in Figure 10, when the insertions are full and seated, a conventional compression tool is used by the worker to apply compression forces 270 around the outside of the sleeve distorting the stainless steel sleeve 250 evenly circumferentially at two longitudinal positions illustrated by the circumferential distortion depressions 255 and 256 in the sleeve.

These distortion depressions 255 and 256 in the sleeve carry through into inner tube 30 forcing the ridges 262 of the male tube insert 261 into the inner tube 30 as shown in Figure 1. The resulting connection is permanent and when properly carried out is air tight and can withstand higher inside pressure than is likely to be encountered in any plumbing or heating installation.

While the invention is described herein in connection with a preferred embodiment, it will be understood that it is not intended to limit the invention to that embodiment. It is intended to cover all alternatives, modifications, equivalents and variations of that embodiment and its features as may be made by those skilled in the art within the spirit and scope of the invention as defined by the appended claims.

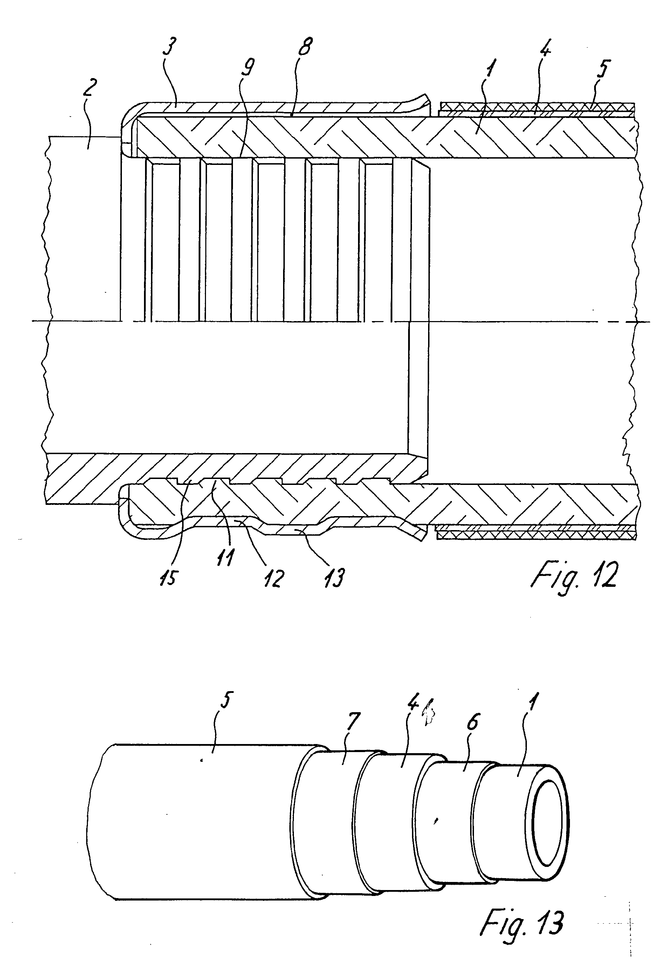

Fig. 12 shows a sectional view of an connecting arrangement with the upper half in an unpressed condition and the lower half after the pressing, and
Fig. 13 shows a perspective view of a multiple layer pipe.

The multiple layer pipe according to Fig. 12 and 13 comprises an inner pipe 1 made of polyethylene, an aluminium layer 4 and an outer layer 5 of polyethylene. Between the inner pipe 1 and the aluminium layer 4 a layer 6 of adhesive is provided for bonding these materials tightly together. In the same way a adhesive layer 7 is provided between the aluminium layer 4 and the outer layer 5.

In the upper portion of Fig. 12 a connecting arrangement in the unpressed condition is shown, comprising a sleeve 3 of metal surrounding the inner pipe 1 of the multiple layer pipe in an end portion. In this end portion a pipe element 2, like a pipe fitting, is inserted in the inner pipe 1, whereby the sleeve 3, the inner pipe 1 and the pipe element 2 are not yet fixed to each other.

In the lower portion of Fig. 13 the same connecting arrangement is shown after pressing the sleeve 3 to provide a tight connection between the inner pipe 1 and the pipe element 2. Due to the pressing some material 11 of the inner pipe 1 has been inserted between ribs 15 of the pipe element 2 providing a connection between both elements being suitable for high pressure applications. The sleeve 3 comprises some indented portions 12 having a smaller radius than some less indented portions 13, so that a sliding of the sleeve 3 after the pressing procedure is not possible due to the shape of the sleeve 3. Since the outer layers 4 and 5 have been removed from the inner pipe 1 the connection between the inner pipe 1 and the pipe element 2 is improved, as there are no different layers at the connecting portion which tend to slide relative to each other after forming a connection. In addition, the adhesive between the layers is not damaged during the pressing procedure, for example due to heat, so that the inventive method provides a durable connecting arangement.

## Claims

1. Apparatus for removing the metal layer from a metal-plastic multilayer pipe (20) where the pipe has
(a) a plastic inner pipe (30) and
(b) a metal layer (32) around the plastic inner pipe (30), where
(c) the metal layer (32) of uniform thickness is applied to the plastic inner pipe (30) so that it completely encircles plastic inner pipe (30),
with the feature that the apparatus has
(d) a pipe holding post (70);
(e) a blade (52) secured to the post and positioned with the cutting-edge (51) thereof along the post;
(f) means (80) for guiding insertion of the post into the end of the pipe (20) so that the blade (52) cuts into the metal layer (32) down to the inner plastic pipe (30); and
(g) means (60) enabling rotating the post (70) and blade (2) with respect to the pipe (20) of rotating the pipe with respect to the post and blade in a direction so that the metal layer (32 thereon is peeled from the end of the tube down to the plastic inner pipe (30).

2. Apparatus for removing the metal layer from a metal-plastic multilayer pipe (20) according to claim 1, with the feature that
(a) the plastic inner pipe (30 material and dimensions is suitable, after stripping the metal layer (32) from the pipe, for using with and connection to conventional compression fittings (60) and sleeves (50) attached by a workman having conventional skills and using conventional press fitting tools .

3. Apparatus for removing the metal layer from a metal-plastic multilayer pipe (20) according to one of the claims 1 and 2, with the feature that the metal sheath (32) contains aluminum.

4. Apparatus for removing the metal layer from a metal-plastic multilayer pipe (20) according to one of the claims 1 to 3, with the feature that the plastic inner pipe (30) contains cross-linked polyethylene (PEX).

5. Apparatus for removing the metal lays from a metal-plastic multilayer pipe (20) according to one of the claims 1 to 4, with the feature that a plastic outer layer (38) is arranged around the metal layer (32) and is removed by the apparatus from the pipe along with the metal layer.

6. Apparatus for removing the metal layer from a metal-plastic multilayer pipe (20) according to one of the claims 1 to 4, with the feature that:
(a) the cutter blade (52) is so positioned with respect to the tube( 2)0 that it cuts through the layers (38) and (32) down to the plastic inner pipe layer (30) at an oblique angle thereto,
(b) the oblique angle that the cutter blade (52) makes with the circumference of the plastic-layer inner pipe layer (30) is essentially tangential and may be varied slightly plus or minus from tangential to insure a clean cut through plastic outer layer (38) and the metal layer (32) to the plastic inner pipe layer (30) without cutting into the plastic inner pipe layer (30).

7. Apparatus for removing the metal layer from a metal-plastic multilayer pipe (20) according to one of the claims 1 to 6, with the feature that:
(a) as the tube (20 )is forced onto the blade cutting edge (51),
(b) the part (54) of the blade edge (51) that is first engaged by the tube (20) may be at an angle to the direction of movement of the tube (20) along the axis (10) as it is forced through the blade edge onto the post (70).
(c) so that with that part (54) of the blade cutting edge (51) so angled , it is more likely to acheive a clean cut into the tube outer layers(38) and (32) and avoid tearing.

8. The method of removing the metal layer from a metal-plastic multilayer pipe (20) where the pipe has
(a) a plastic inner pipe (30) and
(b) a metal layer (32) around the plastic inner pipe (30), where
(c) the metal layer (32) of uniform thickness is applied to the plastic inner pipe (30) so that it completely encircles plastic inner pipe (30), featuring the steps of:
(A) providing a tube holding post which can be inserted into an open end of the pipe projecting into the pipe sufficiently to hold the pipe securely;
(B) providing a blade having a cutting edge that spans the length of the end of the pipe from which the mental sheath and any protective plastic covering layer on it, is to be removed:
(C) attaching the blade to the post with the cutting edge thereof along the post;
(D) positioning the blade with respect to the post with the cutting-edge thereof a distance from the post the equivalent or equal to the thickness of the plastic inner pipe layer of the pipe;
(E) inserting the post with the blade so secured and positioned thereto into the open end of the pipe;
(F) whereby the blade cuts into the metal layer and any plastic covering layer thereon at the end of the pipe down to be inner PEX layer (pipe) of the pipe; and
(G). rotating the post and blade with reference to the pipe about the common axes thersof,
(H) whereby the blade cuts in the metal layer and any plastic covering layer thereon from the edge from the end of the pipe over a length thereof suitable for attaching a conventional compression fitting thereto.

9. Connecting arrangement of a multiple layer pipe comprising a pipe element (2), in particular a pipe fitting, whereby the multiple layer pipe comprises an inner pipe (1) an at least one layer (4, 5) surrounding the inner pipe (1) and the pipe element (2) being at least partly inserted in the inner pipe (1) at a connecting portion, **characterized in that** at the connecting portion a clamping sleeve (3) is pressed on the inner pipe (1) of the multiple layer pipe.

10. Connecting arrangement according to claim 9, **characterized in that** the inner pipe (1) is deformed in the portion of the clamping sleeve (3) in such a manner that the inner pipe (1) is tightly connected to the pipe element (2).

11. Connecting arrangement according to claim 10, **characterized in that** the inner pipe (1) engages in ribs (10) provided at the pipe element (2).

12. Connecting arrangement according to one of claims 9 to 11, **characterized in that** the multiple layer pipe comprises an inner pipe (1) of plastic material being surrounded by a layer of aluminium (4) and a outer layer (5) of plastic.

13. Connecting arrangement according to one of claims 9 to 12, **characterized in that** the outer layers (4, 5) surrounding the inner pipe (1) are cut away.

14. Method for producing a connection between a multiple layer pipe and a pipe element (2), in particular a pipe fitting, comprising the following steps:
- Removing of the outer layers (4, 5) surrounding an inner pipe (1) of the multiple layer pipe in an end portion;
- Attaching a sleeve (3) to the inner pipe (1) at the end portion; Inserting of a pipe element (2) into the inner pipe (1) at the end portion, and
- Pressing of the sleeve (3) to provide a tight connection between the inner pipe (1) and the pipe element (2).

15. Method according to claim 14, **characterized in that** the sleeve (3) is made of metal and that due to the pressing a not detachable connection between the sleeve (3) and the inner pipe (1) is provided.

16. Method according to claim 14 or 15, **characterized in that** the inner pipe (1) is made of plastic and is pressed into ribs (10) of the pipe element (2).
